# EUROPÄISCHE PATENTANMELDUNG

(11) **EP 2 946 973 A1**
(43) Veröffentlichungstag der Anmeldung: **25.11.2015**
(21) Anmeldenummer: 14168853.1
(22) Anmeldetag: 19.05.2014
(51) Int. Cl.: B60P 7/08

(54) **Nutzfahrzeug mit außerhalb des Laderaums festgelegtem Zurrmittel**

(71) Anmelder: Schmitz Cargobull AG, 48341 Altenberge (DE)
(72) Erfinder: Loock, Daniel, 58095 Hagen (DE)
(74) Vertreter: Cohausz & Florack

(57) **Zusammenfassung**

Beschrieben und dargestellt ist ein Aufbau (1) eines Nutzfahrzeugs (N), insbesondere Lastkraftwagens, Anhängers oder Sattelaufliegers, mit einem innerhalb des Aufbaus (1) vorgesehenen Laderaum (8) zum Transport einer Ladung (9) und wenigstens einem Zurrmittel (11) zur Ladungssicherung der Ladung (9) im Laderaum (8). Damit eine gewissenhafte Ladungssicherung einfacher und in kürzerer Zeit erfolgen kann, ist vorgesehen, dass das wenigstens eine Zurrmittel (11) außerhalb des Laderaums (8) am Aufbau (1) festgelegt und zur Ladungssicherung durch eine Öffnung (15) des Aufbaus (1) in den Laderaum (8) geführt ist.

## Beschreibung

Aufbau eines Nutzfahrzeugs, insbesondere Lastkraftwagens, Anhängers oder Sattelaufliegers, mit einem innerhalb des Aufbaus vorgesehenen Laderaum zum Transport einer Ladung und wenigstens einem Zurrmittel zur Ladungssicherung der Ladung im Laderaum.

Nutzfahrzeuge der genannten Art werden insbesondere zum Gütertransport im öffentlichen Straßenverkehr eingesetzt. Die Nutzfahrzeuge können als Lastkraftwagen ausgebildet sein und selbst einen motorischen Antrieb aufweisen. Andernfalls können die Nutzfahrzeuge beispielsweise als Anhänger oder als Sattelauflieger ausgebildet sein. Die Nutzfahrzeuge umfassen einen Aufbau, der einen Laderaum wenigstens teilweise umschließt, in dem die Güter in Form von Ladung transportiert werden. Die Güter werden dabei auf einem Ladeboden abgestellt. Damit die Güter während des Transports nicht verrutschen können, müssen hierfür entsprechende Maßnahmen getroffen werden. Man spricht in diesem Zusammenhang von einer Ladungssicherung. Hierzu kommen beispielsweise Ladebalken, Ladematten, Ladekeile und Zurrmittel in Frage.

Zurrmittel weisen nur eine geringe Eigensteifigkeit auf, können auf Zug belastet werden, weshalb Zurrmittel um die Ladung bzw. die zu transportierenden Güter herum abgespannt werden können. Zurrmittel können dabei als Spanngurte, Seile, Gummizüge, Drähte, Ketten, Netze, Planen und dergleichen ausgebildet sein. Typischerweise werden die Zurrmittel zur Ladungssicherung an geeigneter Stelle am Aufbau des Nutzfahrzeugs festgelegt und im Laderaum abgespannt. Meist werden die Zurrmittel zu diesem Zweck mit einem Haken in eine vom Laderaum aus zugängliche Öse im Aufbau eingehakt. Zum Abspannen des Zurrmittels wird in der Regel eine Ratsche verwendet. Über einen Hebel der Ratsche kann das Zurrmittel teilweise aufgewickelt und so stramm gezogen werden. Um das Abwickeln des Zurrmittels zu ermöglichen, muss die Mechanik der Ratsche manuell freigegeben werden.

Aufbauten der eingangs genannten Nutzfahrzeuge können unterschiedlich aufgebaut sein. Bei Planenaufbauten wird wenigstens eine Seitenwand durch eine Plane verschlossen. Wenn eine Seitenplane an einem Längsholm des Dachs verschiebbar gehalten ist, so dass die Plane zur Rückseite oder zur Vorderseite des Planenaufbaus verschoben werden kann, wird der Aufbau auch als Curtainsider-Aufbau bezeichnet. Bei Kofferaufbauten bestehen die Seitenwände und das Dach aus festen Paneelen. Die Paneele sind typischerweise aus zwei äußeren strukturgebenden Decklagen, die bedarfsweise jeweils mehrlagig aufgebaut sind, und einer dazwischen vorgesehenen Kernlage aufgebaut. Kofferaufbauten werden daher bevorzugt zum Trockentransport von feuchtigkeitsempfindlichen Gütern verwendet. Die Kernlage wird in der Regel aus einem thermisch gut isolierenden, geschäumten Kunststoff gebildet, weshalb Kofferaufbauten auch als Kühltransporter zum Transport von temperaturempfindlichen Gütern verwendet werden.

Bei Planenaufbauten und Kofferaufbauten wird der Laderaum des Nutzfahrzeugs vom entsprechenden Aufbau eingeschlossen. Dies ist bei sogenannten offenen Pritschenaufbauten nicht der Fall. Der Laderaum des Nutzfahrzeugs ist durch den offenen Pritschenaufbau nach oben nicht begrenzt. Offene Pritschenaufbauten können neben einer Stirnwand noch seitliche Bordwände und/oder eine Rückwand umfassen, die in der Regel nach außen heruntergeklappt werden können. Die Rückwand ist daher insbesondere in Form einer Heckklappe ausgebildet. Dabei kann die Stirnwand vom Ladeboden des offenen Pritschenaufbaus weiter nach oben ragen als die seitlichen Bordwände und die Rückwand. Die Stirnwand kann aber auch ebenso weit vom Ladeboden nach oben ragen wie die Bordwände und die Rückwand. Typischerweise ist dabei die Höhe der Bordwände und/oder der Rückwand ausgehend vom Ladeboden kleiner als 2 m, insbesondere kleiner 1,5 m. Die Bordwände und/oder die Rückwand sind typischerweise massiv, etwa aus Metall und/oder einem steifen Verbundwerkstoff ausgebildet.

Das Verzurren der Ladung im Laderaum der Aufbauten ist oft arbeits- und zeitaufwendig. Die Zurrmittel werden meist außerhalb des Laderaums gelagert. Die Zurrmittel müssen daher zunächst an den Ort im Laderaum gebracht werden, an dem die Ladung gesichert werden soll. Anschließend müssen die Zurrmittel am Aufbau festgelegt und verzurrt werden. Da die Fahrer der Nutzfahrzeuge häufig unter einem hohen Zeitdruck stehen, besteht die Gefahr, dass die Ladungssicherung nicht oder nicht ordnungsgemäß erfolgt, beispielsweise zu wenig Zurrmittel zur Ladungssicherung verwendet werden. Zudem ist eine gewissenhafte Ladungssicherung kostenintensiv, da das Nutzfahrzeug in der für die Ladungssicherung benötigten Zeit nicht für den Gütertransport zur Verfügung steht.

Der vorliegenden Erfindung liegt daher die Aufgabe zugrunde, den eingangs genannten und zuvor näher beschriebenen Aufbau derart auszugestalten und weiterzubilden, dass eine gewissenhafte Ladungssicherung einfacher und in kürzerer Zeit erfolgen kann.

Diese Aufgabe wird bei einem Aufbau gemäß dem Oberbegriff des Anspruchs 1 dadurch gelöst, dass das wenigstens eine Zurrmittel außerhalb des Laderaums am Aufbau festgelegt und zur Ladungssicherung durch eine Öffnung des Aufbaus in den Laderaum geführt ist.

Die Erfindung hat erkannt, dass das Zurrmittel, insbesondere dauerhaft, am Aufbau festgelegt werden kann, ohne den Laderaum zu begrenzen, und zwar insbesondere, wenn das Zurrmittel nicht für die Ladungssicherung benötigt wird. Es kann nämlich bei Bedarf soweit wie nötig durch eine Öffnung in den Laderaum gezogen werden. Dabei ist vorzugsweise wenigstens ein Ende des Zurrmittels im Laderaum vorgesehen oder problemlos vom Laderaum zugänglich. So kann das Zurrmittel vom Fahrer des Nutzfahrzeugs leicht ergriffen und zur Ladungssicherung teilweise durch die Öffnung in den Laderaum gezogen werden. Zudem kann durch die Befestigung des Zurrmittels verhindert werden, dass das Zurrmittel versehentlich verloren geht, während es nicht benötigt wird. Darüber hinaus wird die Anzahl loser Teile verringert, was die Handhabung insgesamt vereinfacht. Im Übrigen kann das Festlegen von einem Ende des Zurrmittels am Aufbau entfallen, da das Zurrmittel dort bereits festgelegt ist. Durch eine geeignete Wahl der Position, an der das Zurrmittel festgelegt bzw. durch die Öffnung in den Laderaum gezogen wird, wird ferner die Handhabung des Zurrmittels vereinfacht. Es steht dann dort zur Ladungssicherung zur Verfügung, wo es bei bestimmten Ladesituationen wahrscheinlich zur Ladungssicherung benötigt wird.

Unter dem Laderaum im Sinne der Erfindung kann der durch den Aufbau des Nutzfahrzeugs inklusive des Ladebodens umschlossene Raum verstanden werden. Insbesondere wenn der Teil des Zurrmittels, der in den Laderaum hineingezogen werden kann, in eine Seite, das Dach oder den Ladeboden des Nutzfahrzeugs integriert ist, kann auf den ersten Blick fraglich sein, ob der entsprechende Teil des Zurrmittels im Laderaum oder außerhalb vorgesehen ist. In diesem Fall kann der Laderaum als der vom Aufbau im Sinne einer Umhüllenden eingeschlossene Quader angesehen werden, der vollständig zur Aufnahme von Ladung zur Verfügung steht. Alles, was sich außerhalb dieses Quaders befindet, kann dann als außerhalb des Laderaums angeordnet angesehen werden. Die Öffnung, durch die das Zurrmittel in den so definierten Laderaum gezogen werden kann, kann dann sehr viel größer sein als der Querschnitt des Zurrmittels.

Bei einer ersten bevorzugten Ausgestaltung des Aufbaus ist das wenigstens eine Zurrmittel zur Ladungssicherung durch eine Öffnung in der Stirnwand des Aufbaus in den Laderaum geführt. Das Zurrmittel wird in häufig auftretenden Ladungssituationen im Bereich der Stirnwand benötigt, beispielsweise um nahe der Stirnwand des Aufbaus vorgesehene Ladung gegenüber einem Verrutschen nach hinten zu sichern. Besonders zweckmäßig ist es dabei, wenn das Zurrmittel seitlich zu der zu sichernden Ladung in den Laderaum eingeführt wird. Das Einführen und die Zugänglichkeit des Zurrmittels werden weniger durch die Ladung behindert. Es ist daher besonders bevorzugt, wenn das wenigstens eine Zurrmittel im Bereich der Seitenwand zur Ladungssicherung in den Laderaum geführt ist.

Um die Ladungssicherung weiter zu vereinfachen, können wenigstens zwei Zurrmittel zur Ladungssicherung jeweils durch eine Öffnung des Aufbaus in den Laderaum geführt werden. So werden nicht nur mehr Optionen für die Ladungssicherung zur Verfügung gestellt. Die Zurrmittel können dann zudem gemeinsam zur Ladungssicherung genutzt werden. Dazu können die im Laderaum vorgesehenen Enden der Zurrmittel miteinander verbunden werden. Das Festlegen der Enden am Aufbau des Nutzfahrzeugs ist dann nicht erforderlich. Dies ist insbesondere dann nützlich, wenn keine geeignete Zurröse am Aufbau vorgesehen oder zugänglich ist. Auch in diesem Fall ist es aus den zuvor genannten Gründen weiter bevorzugt, wenn die Zurrmittel durch Öffnungen in der Stirnwand des Aufbaus in den Laderaum gezogen werden können.

Für den Fall, dass mehrere Zurrmittel durch mehrere Öffnungen in den Laderaum gezogen werden können, ist es bevorzugt, wenn wenigstens eine Öffnung dem Bereich der einen Seitenwand und wenigstens eine andere Öffnung dem Bereich der anderen Seitenwand zugeordnet ist. Dann stehen mehrere Optionen für die Ladungssicherung zur Verfügung. Außerdem stehen die Zurrmittel dann seitlich der Ladung zur Verfügung. Somit sind die Zurrmittel auch nach dem Beladen des Laderaums leicht zugänglich. Nicht zuletzt können bedarfsweise mehrere Zurrmittel hinter der Ladung miteinander anstatt mit dem Aufbau verbunden werden. Dies vereinfacht die Handhabung der Zurrmittel weiter, wenn keine geeignete Zurröse am Aufbau vorgesehen oder zugänglich ist.

Alternativ oder zusätzlich ist es bevorzugt, wenn das wenigstens eine Zurrmittel in der Stirnwand und/oder an der Außenseite der Stirnwand festgelegt ist. Im Bereich der Stirnwand kann ausreichend Raum für die wenigstens teilweise Aufnahme des Zurrmittels bereitgestellt werden. Das Zurrmittel sollte jedoch nicht zu weit außen bezogen auf die Stirnwand vorgesehen sein, um beim Durchfahren von Kurven nicht mit dem Zugfahrzeug zu kollidieren. Außerdem kann das in oder an der Stirnwand befestigte Zurrmittel einfach dort bereitgestellt werden, wo es in vielen Fällen einfach und schnell zur Ladungssicherung eingesetzt werden kann.

Um das Zurrmittel gegenüber äußeren Einflüssen zu schützen und um sicherzustellen, dass das Zurrmittel einfach und zuverlässig in den Laderaum eingezogen werden kann, bietet es sich an, wenn wenigstens eine Aufnahmeeinrichtung zur wenigstens teilweisen Aufnahme des wenigstens einen Zurrmittels außerhalb des Laderaums vorgesehen ist. Das Zurrmittel kann dann in der Aufnahmeeinrichtung gezielt aufgenommen werden. Dabei sollte es die Aufnahmeeinrichtung ermöglichen, das wenigstens eine Zurrmittel von der wenigstens einen Aufnahmeeinrichtung wenigstens teilweise zur Ladungssicherung durch die Öffnung des Aufbaus in den Laderaum zu ziehen. So können unnötige Arbeitsschritte vermieden und die Handhabung des Zurrmittels zur Ladungssicherung vereinfacht werden.

Besonders zuverlässig und platzsparend ist die Aufbewahrung des Zurrmittels, wenn das wenigstens eine Zurrmittel wenigstens teilweise in der Aufnahmeeinrichtung aufgewickelt ist. Zur Ladungssicherung kann das Zurrmittel zudem einfach abgewickelt werden. Der Einfachheit halber kann die Aufnahmeeinrichtung dazu eine Trommel aufweisen, auf der das Zurrmittel wenigstens teilweise aufgewickelt werden kann.

Die wenigstens eine Aufnahmeeinrichtung kann auch dazu ausgebildet sein, um einen in der Aufnahmeeinrichtung aufgewickelten Teil des wenigstens einen Zurrmittels abzuwickeln und durch eine Öffnung im Aufbau in den Laderaum ziehen zu können. Die Ausgestaltung der Aufnahmeeinrichtung sollte dann auch ermöglichen, den abgewickelten Teil des Zurrmittels wieder in der Aufnahmeeinrichtung aufzuwickeln, wenn dieser Teil des Zurrmittels nicht zur Ladungssicherung im Laderaum benötigt wird. Auf diese Weise wird die Handhabung des Zurrmittels und die Ausgestaltung des Nutzfahrzeugs vereinfacht. Besonders einfach in der Handhabung ist es dabei, wenn das Zurrmittel gegen eine Rückstellkraft eines Federmittels abgewickelt und durch die Rückstellkraft des Federmittels wieder aufgewickelt werden kann. Dann muss das Zurrmittel lediglich im Laderaum gelöst werden, wonach das Aufwickeln des Zurrmittels im Wesentlichen ohne weitere Arbeitsschritte automatisch erfolgt.

Alternativ oder zusätzlich kann vorgesehen sein, dass die wenigstens eine Aufnahmeeinrichtung in wenigstens einer Stellung derart arretierbar ist, dass ein Aufwickeln und/oder Abwickeln des wenigstens einen Zurrmittels blockiert wird. Dann kann beispielsweise vor und/oder nach dem Abspannen des Zurrmittels verhindert werden, dass das Zurrmittel weiter abgewickelt wird und sich das Zurrmittel lockert. Es kann aber vorgesehen sein, dass das Zurrmittel in einer bestimmten Stellung nicht weiter aufgewickelt wird, um etwa an einer bestimmten Stelle im Laderaum zur Ladungssicherung zur Verfügung zu stehen, ohne erst dort hingezogen zu werden.

Um das wenigstens eine Zurrmittel zur Ladungssicherung in einfacher und effektiver Weise spannen zu können, kann wenigstens eine Ratsche vorgesehen sein. Die Ratsche kann beispielsweise wie bei bekannten Spanngurten ausgebildet sein. Dann kann die Ratsche vom Fahrer des Nutzfahrzeugs intuitiv und fehlerfrei bedient werden.

Dabei ist es aus konstruktiver Sicht und zum Zwecke einer einfachen Handhabung bevorzugt, wenn die wenigstens eine Ratsche am Aufbau festgelegt und/oder in die wenigstens eine Aufnahmeeinrichtung integriert ist. Wenn die Ratsche am Aufbau festgelegt ist, kann das Zurrmittel durch die Ratsche geführt und im abgespannten Zustand an der Ratsche festgelegt sein. Die auf das Zurrmittel wirkenden Kräfte werden dann von der Ratsche an den Aufbau abgeleitet. Bei Integration der Ratsche in die Aufnahmeeinrichtung bedarf es keiner separaten Ratsche. Das Zurrmittel wird dann über die Aufnahmeeinrichtung gespannt und während der Ladungssicherung gehalten. Im Falle einer separaten Ratsche bietet es sich an, wenn die Ratsche an der Außenseite der Stirnwand festgelegt ist. Dort kann Platz vorhanden sein, ohne den Laderaum des Aufbaus zu beschränken. Ist die Ratsche in die Aufnahmeeinrichtung integriert, kann die Ratsche insbesondere in die Halterung der Trommel integriert sein. Um die Halterung der Trommel muss sich die Trommel ohnehin drehen, wenn das Zurrmittel aufgewickelt oder abgewickelt wird.

Grundsätzlich kann die Ratsche einen drehbaren Zahnkranz aufweisen, wobei der Zahnkranz in einer Drehrichtung in einem sperrenden Eingriff mit einem Rastmittel ist, der ein Abwickeln des Zurrmittels verhindert. In der entgegengesetzten Drehrichtung kann der Zahnkranz zum Spannen des Zurrmittels an dem Rastmittel abgleiten. Das Spannen und das Abwickeln des Zurrmittels ist dann auf konstruktiv einfache aber zugleich verlässliche Weise möglich. Dabei bietet es sich weiter an, wenn die Ratsche in eine Freigabestellung bringbar ist, in welcher der sperrende Eingriff zwischen dem Zahnkranz und dem Rastmittel aufgehoben ist. Es kann beispielsweise ein Rastmittel in Form einer Sperrklinge gegen eine Federkraft vom Zahnkranz weg bewegt werden. In der beabstandeten Position kann das Rastmittel bedarfsweise arretiert werden. Dann kann das Zurrmittel beispielsweise ungestört abgewickelt oder aufgewickelt werden.

Um mit geringem Kraftaufwand und sehr zügig hohe Spannkräfte auf das wenigstens eine Zurrmittel aufbringen zu können, kann eine pneumatische oder hydraulische Spanneinheit vorgesehen sein. Beispielsweise umfasst diese einen Hebel, wobei die Betätigung des Hebels nicht direkt mechanisch auf das Zurrmittel übertragen wird, sondern pneumatisch oder hydraulisch, etwa über einen Pneumatikzylinder oder einen Hydraulikzylinder. Entsprechende Pneumatik oder Hydraulikeinheiten sind aus dem Stand der Technik bekannt.

Damit die Ladungssicherung auch mit wenigen Zurrmitteln bei wechselnden Ladesituationen zuverlässig durchgeführt werden kann, können vom Laderaum zugängliche Umlenkpunkte zum Umlenken des wenigstens einen Zurrmittels vorgesehen sein. So kann das wenigstens eine Zurrmittel immer in geeigneter Weise um die Ladung geführt werden, auch wenn das Zurrmittel immer durch dieselbe Öffnung in den Laderaum eingeführt wird. Die Umlenkpunkte, die als Zurrösen oder dergleichen ausgebildet sein können, sind der besseren Erreichbarkeit vorzugsweise am Ladeboden, insbesondere am Rand des Ladebodens, vorgesehen.

Nachfolgend wird die Erfindung anhand von einer lediglich ein Ausführungsbeispiel darstellenden Zeichnung näher erläutert. In der Zeichnung zeigt
- Fig. 1: ein Nutzfahrzeug in Form eines Sattelaufliegers mit einem erfindungsgemäßen Aufbau in Form eines Curtainsiders mit geöffneter Seitenplane in einer perspektivischen Ansicht,
- Fig. 2: die Stirnwand des Aufbaus aus Fig. 1 in einer Draufsicht von außen und
- Fig. 3: ein Detail der Stirnwand aus Fig. 3 in einer Draufsicht von außen.

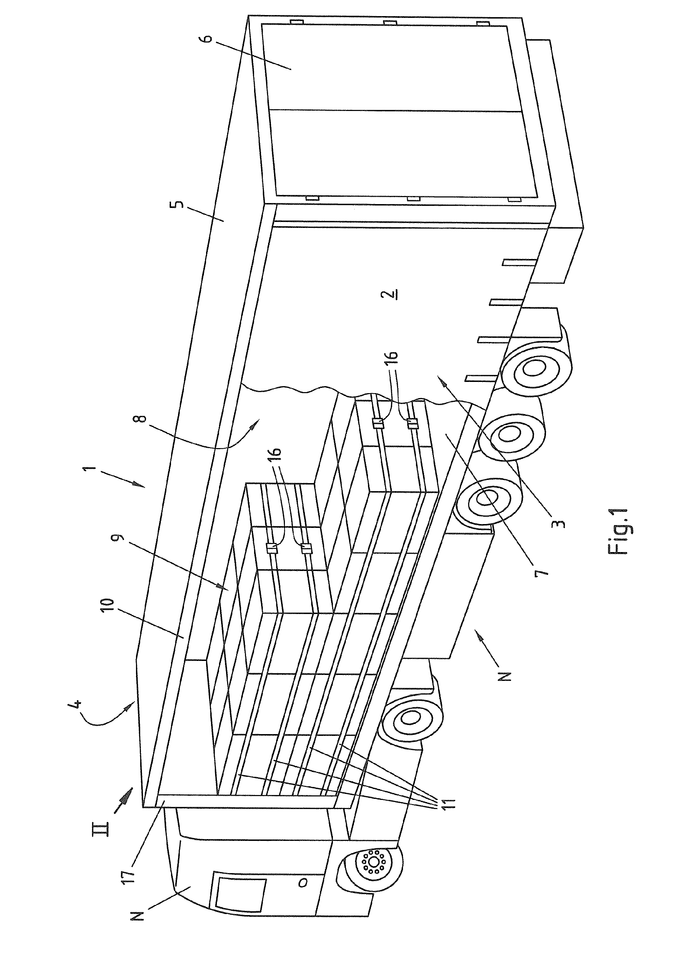

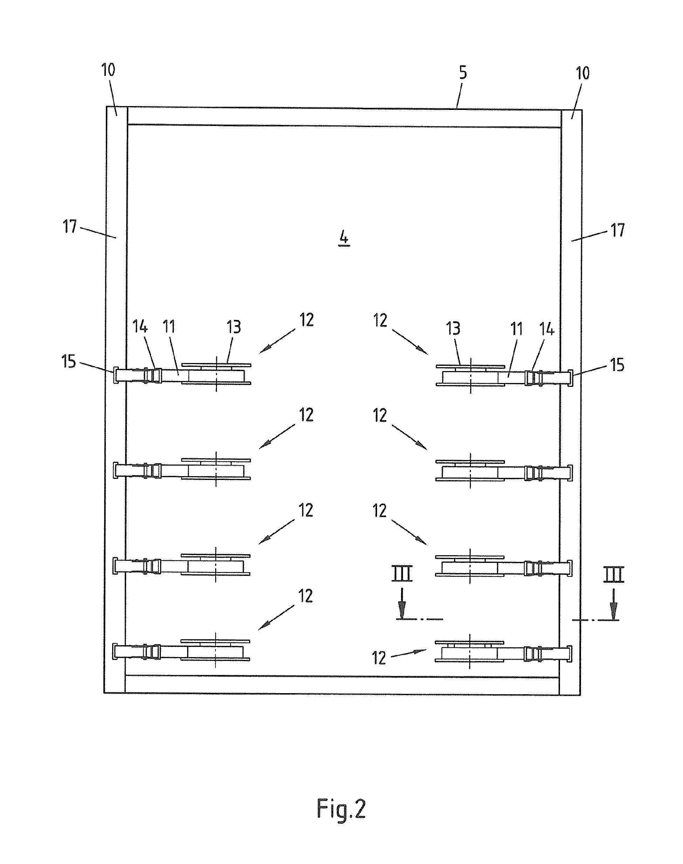

In den Fig.1 und 2 ist ein von einer Zugmaschine Z gezogenes Nutzfahrzeug N in Form eines Sattelaufliegers dargestellt. Das Nutzfahrzeug N weist einen Aufbau 1 in Form eines Curtainsider-Aufbaus mit zwei durch Planen 2 verschließbaren Seitenwänden 3, einer Stirnwand 4, einem Dach 5, einer Rückwand 6 und einem Ladeboden 7 auf. Der Aufbau 1 umschließt einen quaderförmigen Laderaum 8 zur Aufnahme von Ladung 9 in Form von Gütern auf. Die Seitenplanen 2 sind an einem Längsholm 10 des Dachs 5 in Längsrichtung des Nutzfahrzeugs N verschiebbar gehalten. Die Seitenplanen 2 können daher zum Öffnen des Aufbaus 1 nach vorne oder nach hinten geschoben werden, so dass der Laderaum 8 von der entsprechenden Seite beladen oder entladen werden kann.

In der Fig. 2 ist die Ladungssicherung der im Laderaum 8 aufgenommenen Ladung 9 mittels Zurrmitteln 11 dargestellt. Die Zurrmittel 11 sind auf unterschiedlichen Höhen um die Rückseite der Ladung 9 herum geführt und stramm gezogen, so dass die Ladung 9 von hinten gegen die Stirnwand 4 gezogen und gegenüber einem versehentlichen Verschieben in Richtung der Rückwand 6 gesichert wird. Dabei sind die Zurrmittel 11 an der Stirnwand 4 des Aufbaus 1 festgelegt und von dort abgespannt.

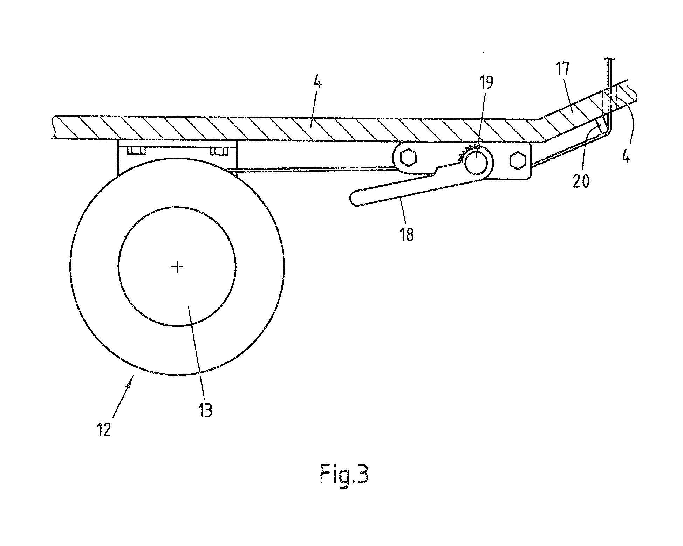

In den Fig. 3 und 4 sind Draufsichten auf die Stirnwand 4 von außen dargestellt. Beim dargestellten und insoweit bevorzugten Aufbau 1 sind an jeder Seite der Stirnwand 4 vier Zurrmittel 11 übereinander festgelegt. Die Zurrmittel 11 sind jeweils teilweise in einer Aufnahmeeinrichtung 12 aufgenommen und dort auf eine Trommel 13 aufgewickelt. Die Aufnahmeeinrichtungen 12 können ein nicht dargestelltes Gehäuse aufweisen, um die Zurrmittel 11 vor Beschädigung und Verschmutzung zu schützen. Der nicht in der Aufnahmeeinrichtung 12 aufgenommene Teil der Zurrmittel 11 ist beim dargestellten und insoweit bevorzugten Aufbau 1 durch eine an der Stirnwand 4 festgelegte Ratsche 14 und durch eine Öffnung 15 in der Stirnwand 4 in das Innere des Aufbaus 1, nämlich den Laderaum 8 geführt. Das freie Ende 16 der Zurrmittel 11 ist im Laderaum 8 angeordnet oder einfach vom Laderaum 8 aus zugänglich. Im nicht abgespannten Zustand der Zurrmittel 11 können die freien Enden 16 der Zurrmittel 11 vom Laderaum 8 aus ergriffen werden, um die Zurrmittel 11 in für die Ladungssicherung ausreichender Länge in den Laderaum 8 zu ziehen. Die Zurrmittel 11 können dann entgegen der Rückstellkraft von Federmitteln der Aufnahmeeinrichtung 12 von den Trommeln 13 abgewickelt werden. Werden die Zurrmittel 11 anschließend losgelassen, ohne in ein anderes Zurrmittel 11 oder in dem Aufbau 1 eingehakt zu sein, so werden die Zurrmittel 11 durch die Rückstellkraft wieder teilweise auf die Trommeln 13 aufgewickelt.

Beim dargestellten und insoweit bevorzugten Aufbau 1 sind die freien Enden 16 der Zurrmittel 11 mit einem Haken versehen. Die freien Enden 16 unterschiedlicher Zurrmittel 11 können dann über die Haken miteinander verbunden werden. Alternativ oder zusätzlich können die freien Enden 16 der Zurrmittel in Zurrösen des Aufbaus 1 eingehakt werden. Die miteinander verbundenen Zurrmittel 11 können beim dargestellten und insoweit bevorzugten Aufbau 1 auf gleicher Höhe an gegenüberliegenden Seiten der Stirnwand 4 vorgesehen, also den gegenüberliegenden Seitenwänden 3 des Aufbaus 1 zugeordnet, sein. Die Öffnungen 15 für das Durchführen der Zurrmittel 11 von außen in den Laderaum 8 sind folglich in den Bereichen der gegenüberliegenden Seitenwände 3 vorgesehen. Beim dargestellten und insoweit bevorzugten Aufbau 1 sind die Öffnungen 15 in den Eckrungen 17 zur beiden Seiten der Stirnwand 4 vorgesehen.

Sind die freien Enden 16 der Zurrmittel 11 in andere Zurrmittel 11 oder entsprechende Zurrösen des Aufbaus 1 eingehakt, können die Zurrmittel 11 durch Betätigen der Hebel 18 der Ratschen 14 gespannt werden. Dabei wird jeweils ein Teil der Zurrmittel 11 auf die Wellen 19 der Ratschen 14 aufgewickelt, wie dies bei Spanngurten üblich ist. Um die Zurrmittel 11 wieder teilweise auf die Trommeln 13 der Aufnahmeeinrichtungen 12 aufwickeln oder noch weiter von den Trommeln 13 der Aufnahmeeinrichtungen 12 abwickeln zu können, müssen die Zurrmittel 11 zunächst wieder vollständig von den Wellen 19 der Ratschen 14 abgewickelt werden. Andernfalls ist das Auf- und Abwickeln der Zurrmittel 11 blockiert.

Zur Ladungssicherung wird beim dargestellten und insoweit bevorzugten Aufbau 1 wenigstens ein freies im Laderaum 8 vorgesehenes Ende 16 eines Zurrmittels 11 ergriffen und soweit benötigt von der Trommel 13 der Aufnahmeeinrichtung 12 abgewickelt sowie durch die Ratsche 14, über eine Umlenkung und durch die Öffnung 15 in der Stirnwand 4 in den Laderaum 8 gezogen. Dabei wird ein mit der Trommel 13 verbundenes Federmittel gespannt. Anschließend wird das freie Ende 16 des Zurrmittels 11 mit einem weiteren freien Ende 16 eines anderen Zurrmittels 11 oder mit einer Zurröse des Aufbaus 1 verbunden. Dazu ist das freie Ende 16 mit einem Haken versehen. Sodann wird das wenigstens eine Zurrmittel 11 durch Betätigen des Hebels 18 der Ratsche 14 stramm gezogen, wobei das Zurrmittel 11 teilweise auf eine Welle 19 der Ratsche 14 aufgewickelt wird. Dadurch wird zugleich verhindert, dass versehentlich weiteres Zurrmittel 11 in den Laderaum 8 gelangt und dort die Spannung des Zurrmittels 11 aufhebt. Zum Entladen wird der sperrende Eingriff der Ratsche 14 gelöst, so dass die Welle 19 der Ratsche 14 wieder zurückgedreht werden kann, wobei sich das Zurrmittel 11 von der Welle 19 abwickelt. Nun kann der Haken des erschlafften Zurrmittels 11 ausgehakt werden. Durch das Federmittel wird das Zurrmittel 11 wieder automatisch auf die Trommel 13 der Aufnahmeeinrichtung 12 aufgewickelt, und zwar gerade soweit, dass das freie Ende 16 im Laderaum 8 verbleibt oder jedenfalls vom Laderaum 8 aus zugänglich bleibt. Alternativ kann das Zurrmittel 11 aber auch weiter von der Trommel 13 abgewickelt werden, etwa wenn eine hinzukommende Ladung 9 gesichert werden soll.

Nicht dargestellt ist, dass der Ratschenmechanismus auch in die Trommeln 13 der Aufnahmeeinrichtung 12 integriert sein kann. Dann sind die Trommeln 13 vorzugsweise mit einer Kurbel zum Drehen der Trommeln 13 versehen. Ein versehentliches Zurückdrehen der Trommeln 13 kann durch einen sperrenden Eingriff zwischen einem Zahnkranz und einem Rastmittel verhindert werden. Dabei sind der Zahnkranz der Trommel 13 und das Rastmittel einem feststehenden Teil der Aufnahmeeinrichtung 12 zugeordnet oder umgekehrt. Um die Zurrmittel 11 zu lösen, also die Spannung der Zurrmittel 11 aufzuheben, können die Rastmittel händisch außer Eingriff mit den Zahnkränzen gebracht werden. Die Zurrmittel 11 können dann von den Wellen der Ratschen und bedarfsweise von den Trommeln 13 der Aufnahmeeinrichtungen 12 abgezogen werden.

Nicht dargestellt ist auch, dass an jedem seitlichen Rand des Ladebodens 7 verteilt mehrere Zurrösen vorgesehen sind, die beispielsweise als Umlenkpunkte für die Zurrmittel 11 genutzt werden können, um die Ladung 9 ausgehend von der Stirnwand 4 an unterschiedlichen Positionen im Laderaum 8 gegenüber einem Verrutschen sichern zu können. Dadurch kann gegebenenfalls auch erreicht werden, dass die Ladung 9 nicht zwingend bis an die Stirnwand 4 reichen muss.

## Patentansprüche

1. Aufbau (1) eines Nutzfahrzeugs (N), insbesondere Lastkraftwagens, Anhängers oder Sattelaufliegers, mit einem innerhalb des Aufbaus (1) vorgesehenen Laderaum (8) zum Transport einer Ladung (9) und wenigstens einem Zurrmittel (11) zur Ladungssicherung der Ladung (9) im Laderaum (8),
**dadurch gekennzeichnet, dass** das wenigstens eine Zurrmittel (11) außerhalb des Laderaums (8) am Aufbau (1) festgelegt und zur Ladungssicherung durch eine Öffnung (15) des Aufbaus (1) in den Laderaum (8) geführt ist.

2. Aufbau nach Anspruch 1,
**dadurch gekennzeichnet, dass** das wenigstens eine Zurrmittel (11) zur Ladungssicherung durch eine Öffnung (15) in der Stirnwand (4) des Aufbaus (1), insbesondere im Bereich einer Seitenwand (3), in den Laderaum (8) geführt ist.

3. Aufbau nach Anspruch 1 oder 2,
**dadurch gekennzeichnet, dass** wenigstens zwei Zurrmittel (11) zur Ladungssicherung jeweils durch eine Öffnung (15), vorzugsweise in der Stirnwand (4), des Aufbaus (1) geführt sind.

4. Aufbau nach Anspruch 3,
**dadurch gekennzeichnet, dass** wenigstens eine Öffnung (15) dem Bereich der einen Seitenwand (3) und wenigstens eine andere Öffnung (15) dem Bereich der anderen Seitenwand (3) zugeordnet ist.

5. Aufbau nach einem der Ansprüche 1 bis 4,
**dadurch gekennzeichnet, dass** das wenigstens eine Zurrmittel (11) in der Stirnwand (4) und/oder an der Außenseite der Stirnwand (4) festgelegt ist.

6. Aufbau nach einem der Ansprüche 1 bis 5,
**dadurch gekennzeichnet, dass** wenigstens eine Aufnahmeeinrichtung (12) zur wenigstens teilweisen Aufnahme des wenigstens einen Zurrmittels (11) außerhalb des Laderaums (8) vorgesehen ist und dass das wenigstens eine Zurrmittel (11) von der wenigstens einen Aufnahmeeinrichtung (12) wenigstens teilweise zur Ladungssicherung durch die Öffnung (15) des Aufbaus (1) in den Laderaum (8) gezogen werden kann.

7. Aufbau nach Anspruch 6,
**dadurch gekennzeichnet, dass** das wenigstens eine Zurrmittel (11) wenigstens teilweise in der Aufnahmeeinrichtung (12), vorzugsweise auf einer Trommel (13) der Aufnahmeeinrichtung (12), aufgewickelt ist.

8. Aufbau nach Anspruch 6 oder 7,
**dadurch gekennzeichnet, dass** die wenigstens eine Aufnahmeeinrichtung (12) dazu ausgebildet ist, dass ein in der Aufnahmeeinrichtung (12) aufgewickelter Teil des wenigstens einen Zurrmittels (11), vorzugsweise gegen eine Rückstellkraft eines Federmittels, abgewickelt und durch die Öffnung (15) des Aufbaus (1) in den Laderaum (8) gezogen werden kann, und dass die wenigstens eine Aufnahmeeinrichtung (12) dazu ausgebildet ist, dass der zuvor von der Aufnahmeeinrichtung (12) abgewickelte Teil des Zurrmittels (11), vorzugsweise durch die Rückstellkraft des Federmittels, wieder in der Aufnahmeeinrichtung (12) aufgewickelt werden kann.

9. Aufbau nach Anspruch 7 oder 8,
**dadurch gekennzeichnet, dass** die wenigstens eine Aufnahmeeinrichtung (12) in wenigstens einer Stellung derart arretierbar ist, dass ein Aufwickeln und/oder Abwickeln des wenigstens einen Zurrmittels (11) blockiert wird.

10. Aufbau nach einem der Ansprüche 5 bis 9,
**dadurch gekennzeichnet, dass** wenigstens eine Ratsche (14) zum Spannen des wenigstens einen Zurrmittels (11) vorgesehen ist.

11. Aufbau nach Anspruch 10,
**dadurch gekennzeichnet, dass** die wenigstens eine Ratsche (14) am Aufbau (1), insbesondere an der Außenseite der Stirnwand (4), festgelegt und/oder in die wenigstens eine Aufnahmeeinrichtung (12), insbesondere in die Halterung der Trommel (13), integriert ist.

12. Aufbau nach Anspruch 10 oder 11,
**dadurch gekennzeichnet, dass** die Ratsche (14) einen drehbaren Zahnkranz aufweist, dass der Zahnkranz in einer Drehrichtung in einem sperrenden Eingriff mit einem Rastmittel ist und der Zahnkranz in einer entgegengesetzten Drehrichtung an dem Rastmittel abgleitet.

13. Aufbau nach Anspruch 12,
**dadurch gekennzeichnet, dass** die Ratsche (14) in eine Freigabestellung bringbar ist, in der der sperrenden Eingriff zwischen dem Zahnkranz und dem Rastmittel aufgehoben ist.

14. Aufbau nach einem der Ansprüche 1 bis 13,
**dadurch gekennzeichnet, dass**
das wenigstens eine Zurrmittel (11) durch eine pneumatische oder hydraulische Spanneinheit gespannt werden kann.

15. Aufbau nach einem der Ansprüche 1 bis 14,
**dadurch gekennzeichnet, dass** vom Laderaum (8) zugängliche Umlenkpunkte zum Umlenken des wenigstens einen Zurrmittels (11), vorzugsweise am Ladeboden (7), insbesondere am Rand der Ladebodens (7), vorgesehen sind.
